# EUROPEAN PATENT APPLICATION

(11) **EP 4 005 995 A1**
(43) Date of publication of application: **01.06.2022**
(21) Application number: 21211468.0
(22) Date of filing: 30.11.2021
(51) Int. Cl.: C04B 18/08, H01M 8/00, H01M 8/0606, H01M 8/0656, H01M 16/00

(54) **PROCESS FOR THE TRANSFORMATION OF FLY ASH IN RAW MATERIAL**

(30) Priority: 30.11.2020 IT 202000029030
(71) Applicant: Resilco S.r.l., 24126 Bergamo (IT)
(72) Inventor: Plescia, Paolo, 00015 Roma (IT); Italiano, Pietro, I-20066 Melzo (MI) (IT); Callejo Munoz, David, I-20134 Milano (IT); Moscato, Ivana, I-24129 Bergamo (IT)
(74) Representative: Mati, Silvia

(57) **Abstract**

The present invention relates to a new process for the transformation of fly ash from combustion into raw materials, in particular an industrial process for chemically and physically modifying fly ash to obtain industrial products. The ash mentioned above is classified as hazardous waste due to its content of hazardous substances (heavy metals and metalloids), dioxins and high chloride content. The process of the present invention converts such ash into solid zeolitic pozzolans, recoverable metal salts and metalloids, while the chlorides are used to produce the chemicals needed for the process itself. The process further includes energy recovery by means of fuel cells and recovery of ammonia, water and soda ash

## Description

### TECHNICAL FIELD

The present invention relates to a new process for the transformation of fly ash from combustion into raw materials, in particular an industrial process for chemically and physically modifying fly ash to obtain industrial products. The fly ash treatable with this process is all ash from municipal and hospital waste incineration processes, combustion ash from coal-fired power plants, heavy oil and tyre combustion, vegetable biomass and from animal carcasses. The ash mentioned above is classified as hazardous waste due to its content of hazardous substances (heavy metals and metalloids), dioxins and high chloride content. The process of the present invention converts such ash into high porosity alumina-silicate products and into recoverable rare metal salts, while chlorides are used to produce the chemicals required for the process itself.

### BACKGROUND

Fly ash is very small flying solid fragments, mainly consisting of silicates and oxidised metals, together with carbonaceous combustion fragments, generated in combustion processes, in particular from waste incineration (or thermal destruction), energy production (combustion of coal, natural gas, biomass, industrial fuel residues such as rubber, heterogeneous plastics, Solid Secondary Fuel), but also from wood or pellet fireplaces themselves. In Europe, fly ash is classified with CER code 1901 and in particular:
- 190113* fly ash containing hazardous substances
- 190114 fly ash other than that mentioned in 190113*

In general, the formation of fly ash or "FA" is linked to imperfect combustion and the presence of incombustible substances such as silicates, carbonates and alkali, earthy or transition metal oxides, which participate in the thermal process with thermal dissociation, oxidation and partial or total melting reactions. Such compounds then go on to generate microscopic condensation nuclei. Fly ash is formed in the thermal range between 350 - 450 °C and 600 - 800 °C, together with so-called "slag or bottom ash", coarse slag which is generated in a higher thermal range and constitutes the non-fly fraction of the ash because it is coarse. Fly ash can be extremely fine in size, ranging from a hundred microns to a few tenths of a micron. It is carried by the stream of flue gases and continues its journey to the chimney, where it is largely intercepted by the action of the filters. The hazardousness of the ash essentially depends on three factors:
- The presence of carbon black, amorphous graphite or other disordered forms of carbon, which act as adsorbent surfaces for dioxins and hazardous organic compounds, such as polychlorinated dibenzo-p-dioxins (PCDDs) and polychlorinated dibenzofurans (PCDFs), which are thus carried out of the chimneys and precipitate in the areas surrounding the plant;
- The presence of low-boiling heavy metals, such as antimony, cadmium, lead, arsenic, mercury, thallium, etc., melted and vaporised in combustion processes, which aggregate with airborne light particles and are thus dispersed into the environment;
- The presence of chlorinated salts, often in quantities greater than 10% (up to 60% by weight), which are extremely corrosive and detrimental to any disposal operation by means of embedding in cementitious binders. In addition to these reasons, fly ash is often characterised by the presence of high percentages of cristobalite and tridymite, two forms of crystalline silica which are potentially carcinogenic.

Fly ash has been the subject of ongoing research into its possible recovery and reuse.

From Quina M. et al. (2018), several treatment and recycling technologies are known, as well as their industrial application methods. Different categories of treatments described in Quina et al. (2018) are aimed at stabilising the ash and extracting the portions usable as chemicals, such as materials for the cement industry, or metals, such as purified zinc and cadmium.

The processes involved in the chemical transformations of FA described in Quina et al. (2018) are basically as follows:
- Carbonation,
- Washing,
- Leaching or bioleaching,
- Stabilisation with cement,
- Electrocoagulation,
- Electrodialysis, and
- Mechanical-chemical grinding (ball-milling).

Most of the fly ash in Europe is transferred to landfills after having undergone solidification/stabilisation (S/S) treatment with cement-based binders. However, such a method is affected by the presence of the high chloride content which reduces (or destroys) the strength of the cementitious matrix (Anastasiadou et al., 2012; Quiang et al., 2016; Xiaofei et al., 2016).

In part, such processes are carried out with some modifications: for example, the use of preventive washing (leaching) of the ash before stabilisation is known (Xuexue, 2016), to remove chlorides.

The leaching is usually carried out in pure or ultrapure water, then breaking down the chlorides as a Friedel salt (Ming et al., 2020). Some known technologies include electrocoagulation and electrodialysis (Wing-Ping et al., 2014) for the removal of heavy metals. Such processes represent interesting examples of alternative treatments, but are only known worldwide as laboratory experiments.

Finally, mechanical-chemical treatments can be an interesting alternative for destroying dioxins and PCDDs/PCDFs, transforming the silicate material into a highly reactive amorphous material. However, such a process has never reached industrial level.

With regard to the recovery of rare metals, this is implemented for gasification ash; the concentration of gallium in gasification ash, present as Ga₂O₃, but also as Al3⁺ vicariants in the glassy fly ash matrices is known to be high. The extraction then occurs through an initial leaching with NaOH - 1M, followed by carbonation, carried out without cavitation, which produces neutralisation up to pH 7.4. (Font et al., 2007).

US 2017/113085 describes leaching fly ash by means of a process with NaOH in the presence of sodium and potassium silicates.

JP H1131379A describes a process for treating fly ash where hydrogen produced by electrolysis is used together with chlorine as a raw material.

US2008/250715 describes a process for the capture and removal of CO₂ where hydrogen is produced.

In the field of zeolite production from fly ash, fly ash from coal gasification is known to be used (Font et al., 2009).

In the state of the art, it is not known to take into account, in the same industrial process, all the processes needed to "fully" convert fly ash into raw materials and products.

In the process of treating fly ash in raw materials there are several problems to be solved which make such a treatment incomplete and not optimised.

Firstly, the "integral" conversion of fly ash into raw materials and products has never been found in the known art. It should be recalled that in order to carry out a full transformation of fly ash, the removal and transformation steps of the following raw materials are required:
1. chlorides
2. dioxins,
3. PCDDs/PCDFs,
4. ammonia,
5. cristobalite and tridymite
6. heavy metals

In particular, the dioxins and PCDDs and PCDFs in the processes of the known art cannot be eliminated.

A second critical issue concerns the dissolution of chlorides in the process: such a dissolution is essential to reduce the amount of water needed for the process and at the same time maintain a high solubilisation efficiency to avoid saturation phenomena.

A further critical issue concerns the recovery of certain substances such as gallium and rare earths. In order to precipitate gallium as an insoluble salt and recover it, alkaline solutions rich in sodium aluminates and hydroxide gels must be separated.

### OBJECTS AND SUMMARY OF THE INVENTION

An object of the present invention is to overcome the drawbacks of the prior art. In particular, it is the object of the present invention to obtain a new industrial process for the transformation of fly ash from combustion into raw materials, which is capable of performing an "integral" conversion by removing chlorides, dioxins, PCDDs/PCDFs, ammonia and heavy metals.

Another object of the present invention is to have a process for the transformation of fly ash from combustion into raw materials which uses the same chloride present in the waste to obtain industrial products such as solid zeolitic pozzolans, heavy metals and metalloids.

"Solid zeolitic pozzolans" are in fact a "product", surpassing the status of waste (End Of Waste) and can be used, for example, in building products, cements and concretes, without the need for further costly treatment processes.

A further object of the present invention is to have a process for the transformation of fly ash from combustion into raw materials capable of producing electrical energy for use in the process itself.

A further object of the present invention is to have a process for the transformation of fly ash from combustion into raw materials, capable of precipitating the metalloids in the form of carbonates.

Finally, a further object of the present invention is to devise a process for the transformation of fly ash from combustion into raw materials which is capable of removing and destroying the PCDDs, PCDFs and dioxin-type compounds present in the ash, without them entering the final products.

These and other objects of the present invention are achieved by means of a process incorporating the features of the appended claims, which form an integral part of the present description.

According to a first aspect of the present invention, the process for the transformation of fly ash from combustion into raw materials is characterised in that it comprises the following steps:
a. Mixing fly ash and water in a mixing reactor, a first solution is obtained which is separated by a separator into a first solid and a first liquid
b. Leaching said first solid in a first leaching reactor with hydrochloric acid (HCl) to a pH between 0.2 and 2, preferably between 0.5 and 1.5 for the removal of heavy metals and their solubilisation in a second solution which is separated by a separator into a second solid and a second liquid
c. Leaching said second solid in a second leaching reactor with concentrated soda ash (NaOH) for a sufficiently long time to obtain a third solution containing the metalloids and magnesium and a third solid which, separated by a separator, gives rise to solid zeolitic pozzolans free of metalloids and heavy metals;
d. Treating said second liquid in a heavy metal stabilisation reactor with NaOH to precipitate the heavy metals as insoluble hydroxides recovered through a separator, developing gaseous ammonia (NH₃) and a fourth solution;
e. Acidifying said third solution in a carbonation reactor with gaseous carbon dioxide (CO₂) using a cavitation injection system made through the union of passive cavitators and active rotating cavitators; precipitating the metalloids in the form of carbonates, which are recovered by means of the separator;
f. Treating said first liquid in an electrolytic cell reactor provided with electrodes to obtain gaseous chlorine on the anodic side and gaseous hydrogen on the cathodic side; said gaseous chlorine being broken down by an oxidation process using hydrogen peroxide in a chlorine transformation reactor to form oxygen and hydrochloric acid; and
g. Transporting the oxygen and hydrogen produced during step f. towards the fuel cell reactor to produce electricity.

In a preferred embodiment of the invention, step e. of the process for treating fly ash is obtained by means of an injection system in which the CO₂ is injected at a pressure between 3-15 bar, preferably between 5-10 bar into a carbonation reactor comprising a series of venturi tubes acting as passive cavitators and a series of active rotating cavitators allowing the recovery of high quantities of carbonates which are extracted by methods known in the art such as augers and filter presses.

In a further preferred embodiment of the invention, the process for treating fly ash comprises the following further steps:
h. Conveying the hydrochloric acid formed in step f. from the chlorine transformation reactor into a tank and then feeding the leaching step b. into the first leaching reactor; and/or
i. Conveying the sodium hydroxide (NaOH) formed in step f. by the electrolytic cell reactor into a tank and then feeding the heavy metal stabilisation step d. into the heavy metal stabilisation reactor; and/or
j. Conveying the gaseous ammonia which develops in the heavy metal stabilisation reactor into an ammonia abatement reactor together with CO₂ and said fourth solution which comes first from the separator and then from a chlorinated solution tank.

Further features and advantages of the present invention will be more evident from the description of the accompanying drawings.

### DEFINITIONS

Unless otherwise defined, all the terms of the art, notations and other scientific terms used herein are intended to have the meanings commonly understood by those skilled in the art to which this description belongs. In some cases, terms with commonly understood meanings are defined herein for clarity's sake and/or ready reference; the insertion of such definitions in the present description must therefore not be interpreted as representative of a substantial difference with respect to what is generally understood in the art.

The terms "comprising", "having", "including" and "containing" are to be understood as open terms (i.e., the meaning "comprising, but not limited to") and are to be considered as a support also for terms such as "essentially consist of", "essentially consisting of", "to consist of" or "consisting of".

The use of "for example", "etc.", "or" indicates non-exclusive alternatives without limitation, unless otherwise indicated. The use of "includes" means "includes, but not limited to" unless otherwise indicated.

The term "heavy metals" in the present invention means all metallic chemical elements which have a density greater than 5 grams per cubic centimeter and are toxic in low concentrations. Examples of heavy metals include Mercury (Hg), Cadmium (Cd), Arsenic (As), Chromium (Cr), Thallium (Tl), Lead (Pb), Zinc (Zn) and Copper (Cu).

The term "metalloids" in the present invention means elements having physical and chemical features opposite those of metals. Examples of metalloids in the present invention are elements such as Arsenic (As), Germanium (Ge), Tellurium (Te), Gallium (Ga), Antimony (Sb) which in the elemental state exhibit characters close to those of metals, while their compounds have non-metallic properties.

The term "separator" in the present invention means an apparatus for separating liquids of different densities or solids from liquids. In a preferred aspect of the invention, centrifugal separators such as hydrocyclones or secondarily a centrifuge or filter press are used.

The term "leaching" in the present invention means the chemical action induced on solids by an aggressive chemical reagent, such as a strong base or a strong acid, which chemically attacks a part of the components of the solid, bringing them into solution.

The term "passive cavitators" in the present invention means static mechanical systems (without moving mechanical parts) such as, but not limited to, the "Venturi" tube, where the aqueous solution is passed at pressures other than ambient pressures and where the geometry of the mechanical system results in the formation of cavitation bubbles.

The term "active rotating cavitators" in the present invention refers to mechanical systems provided with moving mechanical parts (in the specific case rotating); in particular, they can consist of two or more metal discs rotating one against the other, at a speed of more than 200 rpm: the rotations occur in total immersion inside a tank, where the solution is enriched with cavitation bubbles.

"Solid zeolitic pozzolans" means aluminosilicate products. These can also have a high porosity.

### BRIEF DESCRIPTION OF THE DRAWINGS

The invention will be described hereinafter with reference to some examples, given by way of non-limiting example, and illustrated in the appended drawings.

In such drawings,
- Figure 1 schematically depicts blocks of a preferred embodiment of the process for the transformation of combustion fly ash into raw materials according to the present invention;
- figure 2 shows some details of the process schematic of figure 1, in particular some reactors and collection tanks for the recovery of hydrochloric acid, soda ash and recovery water;
- figure 3 shows a detail of the process schematic of figure 1, namely an ammonia abatement reactor with a saline solution collection tank; and
- figure 4 shows a schematic of a carbonation reactor comprised in the process schematic of figure 1.

### DETAILED DESCRIPTION OF THE INVENTION

While the invention is susceptible to various alternative modifications, some preferred embodiments will be described in detail below. It must in any case be understood that there is no intention to limit the invention to the specific embodiment illustrated, but, on the contrary, the invention intends to cover all the modifications and equivalent which fall within the scope of the invention as defined in the claims.

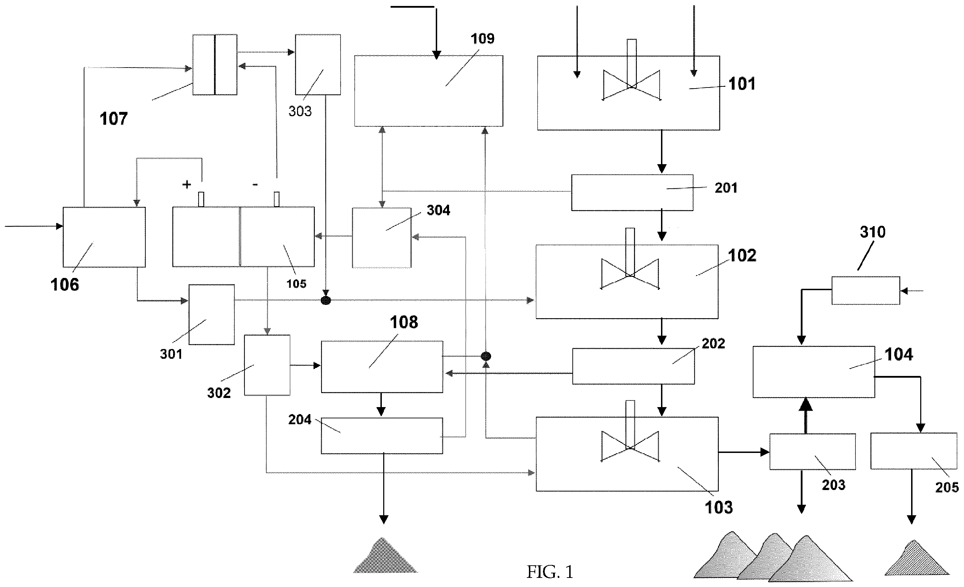

The various steps of the process are shown in the process schematic in Figure 1.

In the process schematic of Figure 1, fly ash is mixed with water in a mixing reactor 101. A first solution (i) is formed which is separated by a first centrifugal separator 201 into a first solid (ii) containing ash which is no longer chlorinated and a first liquid (iii) containing chlorides.

The first solid (ii) containing the ash which is no longer chlorinated is sent to a first leaching reactor 102 where it is treated with hydrochloric acid, thus obtaining a second solution (iv) which is sent to a second centrifugal separator 202 thus obtaining a second solid (v) and a second liquid (vi).

The second solid (v) in output from the second separator 202 is sent to a second leaching reactor 103 where it is treated with concentrated soda ash (NaOH) for a sufficiently long time to obtain a third solution (vii), alkaline, containing metalloids, magnesium and a third solid (viii) which, separated by a third centrifugal separator 203, gives rise to pozzolans (zeolites) free of metalloids and heavy metals.

The third alkaline solution (vii) passes to a carbonation reactor 104 where it is acidified with gaseous carbon dioxide leading, by means of a fifth separator 205 to the precipitation of metalloids in the form of carbonates.

The first saline liquid (iii) from the first separator 201 is led into a fourth tank 304 and then into an electrolytic cell reactor 105 in which there is an electrolytic cell consisting of carbon electrodes separated by a permeable membrane.

The electrodes act so that gaseous chlorine at the anode and gaseous hydrogen at the cathode develop separately while the solution is enriched in soda ash. The gaseous chlorine is fed into a chlorine processing reactor 106 where it is treated with hydrogen peroxide to produce oxygen and hydrochloric acid, the latter being collected in a first tank 301. The oxygen is removed and conveyed to a fuel cell reactor 107 together with H₂ from the electrolytic cell reactor 105 to produce electrical energy in the form of direct current.

In view of the above, the first process step (step a.) for the transformation of fly ash into raw materials consists in mixing fly ash and water in the mixing reactor 101, obtaining a first solution (i) which is separated by the first separator 201 into a first solid (ii) and a first liquid (iii).

In a preferred aspect of the invention, the mixing reactor 101 comprises one or more tanks (preferably closed) inside which the ash is introduced and mixed with water, using one or more piston pumps and/or blade mixers.

The mixing is performed to dissolve the saline component, consisting of sodium chloride (NaCl) and potassium chloride (KCl) which is normally present in quantities between 1% and 50% by weight with respect to the total sum of the components, preferably between 5% and 40%; the resulting saline liquid is separated preferably by the first separator 201, preferably a hydrocyclone or a filter press or a centrifuge, thus obtaining two products: the first solid consisting of the ash which is no longer chlorinated (solid (ii)) and the first liquid with high saline concentration (iii).

The second process step of the invention (step b.) comprises leaching the first solid (ii) comprising the ash which is no longer chlorinated from the mixing reactor 101 and separated from the hydrocyclone 201 in the first leaching reactor 102 with a dilute hydrochloric acid (HCl) solution.

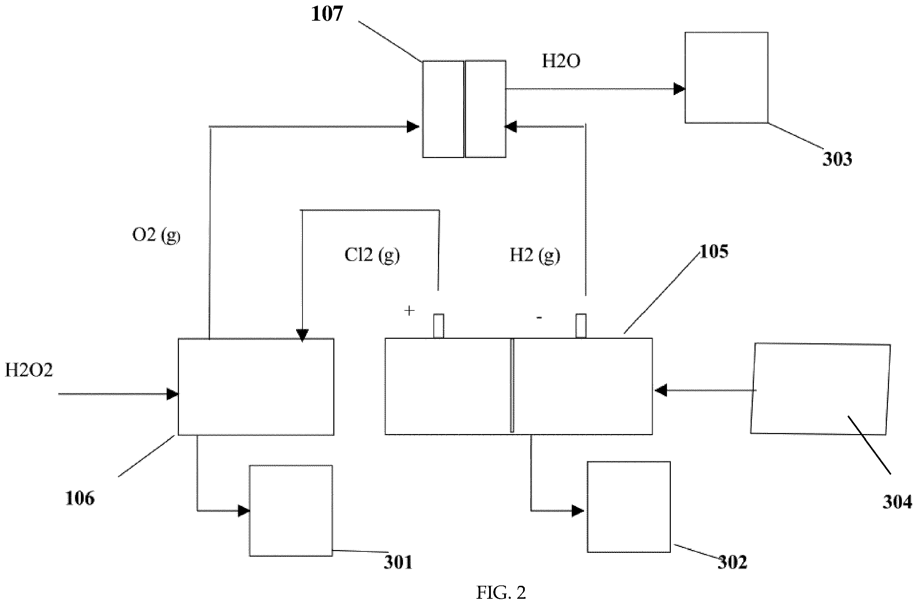

In a preferred aspect of the invention, the dilute hydrochloric acid comes from the first storage tank 301 of the HCl produced by the chlorine processing reactor 106 as shown in Figure 2.

The acid enables the pH of the mixture to be raised to values in the range 0.5 to 2, preferably between 1 and 1.5, causing the solubilisation of heavy metals from the ash (Pb, Cd, Zn, Cu, etc.).

The ash leached from the acid in the first leaching reactor 102 is separated from the liquid fraction by the second separator 202 into a second solid (v) and a second liquid (vi).

In the third process step (step c.) the second solid (v) from the second separator 202 is leached with concentrated soda ash (NaOH) in a second leaching reactor 103.

Concentrated soda ash means that the soda ash content is between 0.1 M and 5 M, preferably between 1 and 3 M.

In a preferred aspect of the invention, the concentrated soda ash comes from a second tank 302 which in turn is generated in the electrolytic cell reactor 105 as seen in figure 2.

The third solution (vii) containing soda ash acts against the metalloids which form amphoteric and soluble compounds in alkaline solution and, among these, metals such as Gallium (Ga) and Germanium (Ge), Vanadium (V) and Antimony (Sb) which are subject to recovery. Magnesium (Mg) is also leached out by the action of the soda ash.

The leaching liquid is kept in contact with the solid long enough to extract as much metalloid as possible and to allow time for the aluminosilicates to react with the soda ash and crystallise the pozzolans (zeolites) phases in the solid fraction (viii).

Generally, the contact time is between 1 and 6 hours, preferably between 1 and 3 hours, but this depends on the temperature of the slip and the concentration of soda ash, with the general rule being that the higher the concentration of soda ash, the faster the zeolites crystallise.

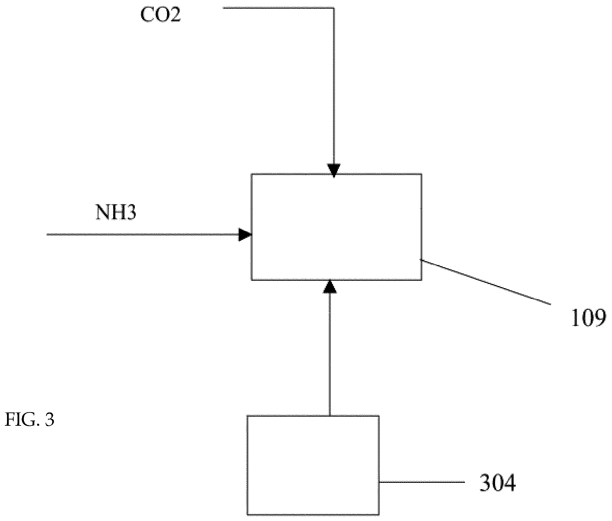

Said third solid (viii) is separated by means of the third separator 203 which discharges the residual solid in the form of pozzolan free of heavy metals and metalloids. In the second leaching reactor 103, ammonia gases may be formed as a result of the reactions between the ammonium ions and the sodium base. Therefore, in a preferred aspect of the invention, the leaching reactor 103 is placed under suction and the suctioned gases are conveyed to the ammonia abatement reactor 109 as seen in figure 3.

In the fourth process step (step d.), the second liquid (vi) from the second separator 202 is treated in a heavy metal stabilisation reactor 108 with soda ash (NaOH) to precipitate the heavy metals as insoluble hydroxides, while achieving the degradation of the hazardous compounds PCDDs and PCDFs.

It should be noted that such pollutants are difficult to treat and require costly oxidative treatment. Surprisingly, this problem was solved with better solubilisation of the chlorides by virtue of the cavitators described below, which process the mixture of air, water and solid. The presence of CO₂ in the process air greatly increases the cavitation-induced oxidation on the organic compounds, causing a surprising further decrease. The oxidation is generated by the formation of OH° radicals in the liquid downstream of the implosion of the cavitation bubbles and these radicals quickly oxidise all the organic compounds present in the liquid, including the dioxins, PCDDs and PCDFs. The presence of CO₂ increases the oxidation factor if_it is kept at around 1-2% in a mixture with other atmospheric gases.

The use of hydrodynamic cavitators surprisingly increases the solubility of CO₂ in the process water and consequently increases the yield of the process in terms of the amount of carbonate produced, by between 20 and 40% compared to simple CO₂ injection. Thereby, the cavitators allow to avoid using high pressures to increase the quantity in the water."

In a preferred aspect of the invention, the soda ash used is part of the soda ash produced by the electrolytic cells of the electrolytic cell reactor 105 collected in the second tank 302 as seen in figure 2. Said treatment with soda ash (NaOH) results in the precipitation of metal hydroxides and the generation of gaseous ammonia. The ammonia is removed and moved to the ammonia abatement reactor 109 (figure 3).

The solid-liquid mixture is separated by a fourth separator 204, for example a hydrocyclone, from which a fourth solution (ix) emerges which is conveyed to the chlorinated solutions tank (fourth tank 304 - figure 3) and from there to the subsequent electrolytic cell reactors 105 and ammonia abatement reactors 109, while the solid (sludge) is discharged by means of the fourth separator 204, preferably a hydrocyclone, as a concentrate of insoluble metal hydroxides. This ensures that the heavy metals are removed and possibly recovered.

Step e. comprises acidifying said third solution (vii) coming from the third separator 203 in the carbonation reactor 104 with gaseous carbon dioxide (CO₂) to precipitate the metalloids in the form of carbonates by means of a cavitation injection system 310, made through the union of passive cavitators and active rotating cavitators, said carbonates being recovered by means of the fifth separator 205.

In order to precipitate gallium as an insoluble salt and recover it, alkaline solutions rich in sodium aluminates and hydroxide gels must be separated. Surprisingly, the use of hydrodynamic cavitators, both active and passive, by virtue of the cavitation bubbles increase the solubility of carbon dioxide in water so that the total precipitation of the carbonates is possible.

Said "cavitation injection system" is a further object of the present invention. It is based on the principle of cavitation: as is well known, cavitation is the phenomenon whereby vapour bubbles are generated from a liquid subjected to very rapid depressurisation phenomena, as occurs with turbines and propellers in water, where the outermost parts cause the water sheets to "detach" and vaporise.

The phenomenon is highly energetic, as these bubbles implode violently, causing the vapour and gases contained therein to reach extremely high pressures and temperatures.

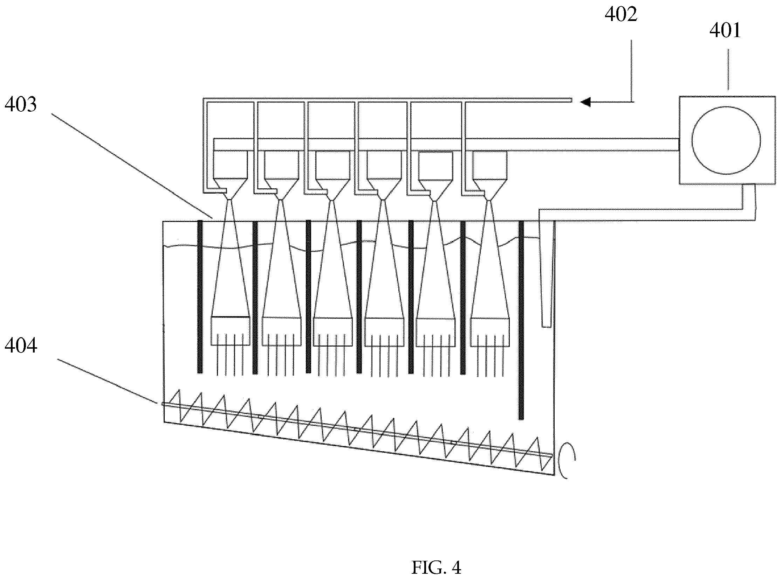

Cavitation can be generated in many ways, but in the system object of the present invention, it is achieved through the combination of Venturi tubes 403 (passive cavitators) and active rotating cavitators. Figure 4 summarises the features described: a hydraulic pump 401 pushes the solution towards a Venturi tube, through which the CO₂ 402 is injected; the pressure forces the CO₂ to dissolve in the water and produce an initial array of cavitation bubbles which, as they implode, increase the solubilisation of the CO₂ in the liquid. Part of the gas remains undissolved; the gas-water emulsion reaches the rotating cavitator, which produces a further acceleration of the dissolution phenomenon, bringing the CO₂ itself to supercritical pressures and temperatures, which are known to be 70 bar and 40°C.

The phenomenon of the forced dissolution of CO₂ is indicated by the pH of the solution itself, which lowers towards lower and lower values: starting from a pH of 12, the solutions rapidly drop to a pH of less than 8, due to the formation of high concentrations of carbonic acid.

The encounter between this CO₂-containing solution, the alkaline ions and the oxyanions produces the formation of solid carbonate particles, preferably of "calcite", "aragonite", "nesquionite" and other more complex forms of mixed carbonates, which are recovered by means of suitable filter presses 404

In order to optimise the process, a recovery of energy and raw materials is envisaged. A first critical point is the dissolution of the chlorides. On this subject, many authors have demonstrated the effect of the solid-liquid ratio, which must be as low as possible in order to avoid saturation phenomena. At the same time, the same authors indicate the importance of solubilisation aids such as mixers, more or less fast impellers and others. However, no one has so far used hydrodynamic cavitators as a means of inducing greater and more efficient solubilisation. Such cavitators are used in the present patent to increase the solubility of chlorides, thus being able to reduce the amount of water required for the process and at the same time maintain high solubilisation efficiency.

In fact, step f involves treating the first saline liquid (iii) coming from the first separator 201 in the reactor with electrolytic cells 105 provided with electrodes to obtain gaseous chlorine in the anodic part and gaseous hydrogen in the cathodic part; said gaseous chlorine is broken down by an oxidation process using hydrogen peroxide in the chlorine transformation reactor 106 to form oxygen and hydrochloric acid.

More particularly, the first saline liquid (iii) - in a preferred aspect of the invention - is pumped into the fourth tank 304 (figure 2) from which an aliquot is withdrawn to feed the electrolytic cells of the electrolytic cell reactor 105. Said electrolytic cells are well known and commercially available, and have been used for decades in the production of chlorine and hydrogen from salt solutions. The working conditions are also known and depend on the concentrations of soda ash, chlorine and hydrogen to be reached.

Preferably, the electrodes are designed to collect the separate gaseous phases, gaseous chlorine on the anodic side and gaseous hydrogen on the cathodic side (figure 2).

The saline solution thus loses chlorine and hydrogen and is enriched with NaOH. In a preferred aspect of the invention, the electrolytic cell is controlled by a microprocessor control unit which collects data on pH, soda ash concentration, temperature and conductivity.

Having reached a concentration between 0.5 M and 3 M, the soda ash is discharged into the second tank 302 (figure 2) made of polymeric material, while the electrolytic cell is again supplied with a new volume of saline solution from the mixing reactor 101.

To conclude the process step, the chlorine gas from the anode of the electrolytic cell is broken down by an oxidation process. In a preferred aspect of the invention, the oxidation process is conducted using hydrogen peroxide (H₂O₂) in the chlorine transformation reactor 106 (figure 2). The gaseous chlorine is directly transferred to the chlorine transformation reactor 106 where a concentrated solution of hydrogen peroxide is present and where the following reaction occurs:

Cl₂ + H₂O₂ → 2HCl + O₂

The reaction is moderately exothermic and generates 37 kcal/mole (155 kj/mole).

The chlorine is converted to hydrochloric acid, removed and fed into the first tank 301 (figure 2).

A further reaction by-product is pure gaseous oxygen for the last step of the process (step g.), which comprises conveying the oxygen and hydrogen produced at the cathode of the electrolytic cell reactor 105 during step f. to the fuel cell reactor 107 to produce electrical energy in the form of direct electrical current.

The electrical current is stored in batteries or super-capacitors, which are adapted to obtain a power "lung" for the electrolytic cells themselves. An external power supply is added to the generation circuit to compensate for losses and to supply the cells with the proper voltage at all times.

In a preferred aspect of the invention, a renewable energy production system is used, even more preferably photovoltaic cells.

A microprocessor control unit governs the power supplies and the management of the supply valves. The water produced by the cells is stored in a third steel tank 303 and from there conveyed to the various reactors.

In a further preferred embodiment of the invention, the process for treating fly ash comprises at least one of the following further steps:
h. Conveying the hydrochloric acid formed in step f. from the chlorine transformation reactor 106 into the first tank 301 and then feeding the leaching step b. into the first leaching reactor 102;
i. Conveying the sodium hydroxide (NaOH) formed in step f. from the electrolytic cell reactor 105 into a tank and then feeding the heavy metal stabilisation step d. into the heavy metal stabilisation reactor 108; and/or
j. Conveying the gaseous ammonia which develops in the heavy metal stabilisation reactor 108 into an ammonia removal reactor 109 together with CO₂ and the fourth saline solution (ix) coming first from the fourth separator 204 and then from the third chlorinated solution tank 303.

As mentioned above, the gases from the heavy metal stabilisation reactor 108 and the second leaching reactor 103 may contain gaseous ammonia. For this reason, these gases are sent to the ammonia abatement reactor 109 (figure 3), where the Solvay reaction is used:

CO₂ + 2 NH₃ + 2 NaCl + H₂O → 2 NH₄Cl + Na₂CO₃

In order to carry out such a process, part of the sodium chloride saline solution and part of the CO₂ are sent to the ammonia abatement reactor 109, where the ammonia is bubbled into the aqueous saline solution, generating ammonium chloride and sodium carbonate. The solution is then removed from the circuit and can be used as the basis for making a liquid fertiliser.

In order to demonstrate the efficiency of the process, a mass balance is carried out to determine how much material is used and produced. The following balance items, expressed in tonnes per year, have been included in the budget
- Fly ash (FA);
- Process water;
- CO₂ from industrial streams; and
- Hydrogen peroxide.

The intermediate products are those generated by the partial circuits:
- Chloride solution from washing 101;
- Ammonia from alkaline stripping from the heavy metal stabilisation reactor 108 and the second leaching reactor 103;
- Hydrochloric acid from the chlorine abatement from the chlorine transformation reactor 106 and used in the first leaching reactor 102; and
- Water from fuel cell reactor 107.

**Table 1: Circuit mass balance**

| **Enter** | **T/year** | **Intermediate** | **T/year** | **Exit** | **T/year** |
|---|---|---|---|---|---|
| FA+H2O | 200000 | chlorides | 30000 | Zeolites & pozzolans | 76497 |
| | | ammonia | 2000 | Carbonates Ga, V, Sb | 2000 |
| CO₂ | 3945 | HCl | 14671 | Metal hydroxides | 11815 |
| | | water FC | 7239.8 | Sodium carbonate | 9502 |
| H2O2 | 6847.0 | metal chlorides | 18786.39 | Ammonium chloride | 5939 |
| | | total soda ash produced | 17536.7 | | |
| | | water process ammonia | 97400 2000 | | |
| | | water from 103, ,108 and 109 | 21000 | | |
| **Total entering** | **210792** | | **210633** | **Total products** | **210392** |

With respect to the mass balance, part of some reagents is necessarily supplied from outside. For example, the amount of hydrochloric acid required for acid leaching in the chlorine transformation reactor 106 depends on the initial alkalinity of the ash. The amount of soda ash to be used in the alkaline leaching in the second leaching reactor 103 also depends on the type of final zeolite to be produced.

As can be seen from Table 1, the process of the invention allows the recovery of metalloids in the form of carbonates, heavy metals in the form of hydroxides and the ash residue as pozzolans, resulting in more than 76,000 tonnes of zeolitic pozzolans, completely free of chlorine which is completely reused in the process itself.

### REFERENCES

Quina M. et al., Technologies for the management of MSW incineration ashes from gas cleaning: New perspectives on recovery of secondary raw materials and circular economy, Science of The Total Environment, Volume 635, 1 September 2018, Pages 526-542 (2018);
Anastasiadou et al., Solidification/stabilisation of fly and bottom ash from medical waste incineration facility Journal of Hazardous Materials Volumes 207-208, 15 March 2012, Pages 165-170 (2012);
Qiang et al., Contributions of fly ash and ground granulated blast-furnace slag to the early hydration heat of composite binder at different curing temperatures, Construction and Building Materials 98:649-655 (2016)
Xiaofei et al., A Review on the Management of Municipal Solid Waste Fly Ash in American Procedia Environmental Sciences Volume 31, 2016, Pages 535-540 (2016);
Xuexue, Mechanical property and heavy metal leaching behavior enhancement of municipal solid waste incineration fly ash during the pressure-assisted sintering treatment Journal of Environmental Management 301:113856 (2016);
Ming Gao et al, Dechlorination of fly ash by hydrolysate of municipal solid waste leachate, Royal Society of Chemistry Adv., 2020, 10, 26397
Wing-Ping Liao et al., The application of electrocoagulation for the conversion of MSWI Fly ash into nonhazardous materials, J. Environ. Manage. 2014, 1, 137: 157-162 doi: 10.1016/j.jenvman.2014.02.012
Font et al., Recovery of gallium and vanadium from gasification fly ash Journal of Hazardous Materials 139(3): 413-23 (2007);

Font et al., (2008) Differential nibehaviour of combustion and gasification fly-ash from Puertollano Power Plants (Spain) for the synthesys of zeolites and silica extraction, Journal of Hazardous Materials 166(1) 94-102 DOI: 10.1016/j.jhazmat.2008.10.120

## Claims

1. Process for the transformation of fly ash from combustion into raw materials, **characterised in that** it comprises the steps of:
a. Mixing fly ash and water in a mixing reactor (101) resulting in a first solution (i) which is separated by a first separator (201) into a first solid (ii) and a first liquid (iii);
b. Leaching said first solid (ii) in a first leaching reactor (102) with hydrochloric acid (HCl) for the immobilisation of the heavy metals and their solubilisation in a second solution (iv) which is separated by means of a second separator (202) into a second solid (v) and a second liquid (vi);
c. Leaching said second solid (v) in a second leaching reactor (103) with concentrated soda ash (NaOH) for a sufficiently long time to obtain a third solution (vii) containing metalloids and magnesium and a third solid (viii) which, separated by a third separator (203), gives rise to solid zeolitic pozzolans free of metalloids and heavy metals;
d. Treating said second liquid (vi) in a heavy metal stabilisation reactor (108) with NaOH to precipitate the heavy metals as insoluble hydroxides recovered through a fourth separator (204), developing gaseous ammonia (NH₃) and a fourth saline solution (ix);
e. Acidifying said third solution (vii) in a carbonation reactor (104) with gaseous carbon dioxide (CO₂) to precipitate the metalloids in the form of carbonates by means of a cavitation injection system made through the union of passive cavitators and active rotating cavitators, said carbonates being recovered by means of a fifth separator (205);
f. Treating said first saline liquid (iii) in an electrolytic cell reactor (105) provided with electrodes to obtain gaseous chlorine in the anodic part and gaseous hydrogen in the cathodic part; said gaseous chlorine being broken down by an oxidation process using hydrogen peroxide in a chlorine transformation reactor (106) to form oxygen and hydrochloric acid; and
g. Transporting the oxygen and hydrogen produced during step f. to a fuel cell reactor (107) to produce electrical energy in the form of electricity.

2. Process according to claim 1, in which during step a. the mixing reactor (101) comprises one or more tanks and wherein the ash is introduced therein and mixed with water, using one or more piston pumps and/or blade mixers.

3. Process according to claim 1 or 2, in which during step a. the mixing is performed to dissolve the saline component, comprising sodium chloride (NaCl) and potassium chloride (KCl) both present in quantities between 1% and 50% by weight of the total sum of the components, preferably between 5% and 40%.

4. Process according to any one of the preceding claims, in which in step b. the hydrochloric acid (HCl) is allowed to reach a pH between 0.5 and 2, preferably between 1 and 1.5.

5. Process according to any of the preceding claims, in which during step c. the soda ash content is between 0.1 M and 5 M, preferably between 1 and 3 M.

6. Process according to any one of the preceding claims, in which during step c the soda ash solution (vii) acts on the metalloids to form amphoteric, alkalisoluble compounds such as Gallium (Ga), Germanium (Ge), Vanadium (V), Antimony (Sb) and Magnesium (Mg) which are subject to recovery.

7. Process according to any one of the preceding claims, in which during step c. the leaching liquid remains in contact with the solid for a time between 1 and 6 hours, preferably between 1 and 3 hours.

8. Process according to any one of the preceding claims, in which during step d. by radical oxidation due to cavitation, the degradation of the hazardous compounds PCDDs and PCDFs is obtained.

9. Process according to any one of the preceding claims, in which, during step e. the passive cavitators are static mechanical systems, preferably an array of Venturi tubes, and wherein the active rotating cavitators are mechanical systems having moving mechanical parts comprising two or more metal discs rotating in opposition to each other, preferably at a speed of more than 200 rpm.

10. Process according to any one of the preceding claims, in which during step f., the electrolytic cell is controlled by a microprocessor control unit which collects data on pH, soda ash concentration, temperature and conductivity.

11. Process according to any one of the preceding claims, in which during step g. the electrical current is stored in batteries, preferably supercapacitors, adapted to make a supply "lung" for the electrolytic cells themselves.

12. Process according to any one of the preceding claims, in which during step g. the electrical power generation system is in the form of direct electrical current, preferably in the form of renewable direct electrical current.

13. Process according to any one of the preceding claims, comprising at least one of the following further steps:
h. Conveying the hydrochloric acid formed in step f. from the chlorine transformation reactor (106) into a first tank (301), and then feeding the leaching step b. into the leaching reactor (102); and/or
i. Conveying the sodium hydroxide (NaOH) formed in step f. from the electrolytic cell reactor (105) into a second tank (302), and then feeding the heavy metal stabilisation step d. into the heavy metal stabilisation reactor (108); and/or
j. Conveying the gaseous ammonia which develops in the heavy metal stabilisation reactor (108) into an ammonia abatement reactor (109) together with CO₂ and the fourth saline solution (ix) coming first from the fourth separator (204) and then from a third chlorinated solution tank (303).

14. Process according to any one of the preceding claims, in which during step f. the saline solution which has lost chlorine and hydrogen is enriched with NaOH which, having reached a concentration between 0.5 and 3 M, is discharged into the second tank (302).
